# EUROPÄISCHE PATENTSCHRIFT

(11) **EP 2 014 950 B1**
(45) Veröffentlichungstag und Bekanntmachung des Hinweises auf die Patenterteilung: **09.03.2011**
(21) Anmeldenummer: 08010555.4
(22) Anmeldetag: 11.06.2008
(51) Int. Cl.: F16H 7/08

(54) **Druckmittelversorgung für eine hydraulische Spanneinrichtung eines Zugmittelgetriebes**
Pressure fluid supply for a hydraulic tension device for a flexible element transmission
Alimentation en fluide sous pression pour un tendeur hydraulique d'une transmission à élément flexible

(30) Priorität: 13.07.2007 DE 102007032648
(43) Veröffentlichungstag der Anmeldung: 14.01.2009
(73) Patentinhaber: Bayerische Motoren Werke Aktiengesellschaft, 80809 München (DE)
(72) Erfinder: Kraft, Roland, 80995 München (DE); Grois, Peter, 85757 Karlsfeld (DE); Reuss, Bernhard, 81247 München (DE); Köhler, Reinhard, 80999 München (DE)

(56) Entgegenhaltungen:
- EP-A- 1 258 655
- DE-A1- 4 035 254
- DE-A1- 4 241 940
- DE-A1- 10 244 894
- DE-A1- 10 312 099
- DE-A1- 10 360 497
- DE-A1- 19 758 116
- DE-A1-102006 035 603
- JP-A- 2006 266 167
- US-A1- 2005 096 166

## Beschreibung

Die Erfindung betrifft eine Druckmittelversorgung für eine hydraulische Spanneinrichtung eines Zugmittelgetriebes umfassend ein erstes Druckmittelreservoir, eine Pumpe zur Förderung von Druckmittel aus dem ersten Druckmittelreservoir zur Spanneinrichtung und ein zweites Druckmittelreservoir zwischen erstem Druckmittelreservoir und Spanneinrichtung.

Aus der DE 19758116 ist eine Druckmittelversorgung mit den Merkmalen des Oberbegriffes des Anspruchs 1 bekannt.

Hydraulische Spanneinrichtungen werden bei Zugmittelgetrieben, insbesondre zum Antrieb von Nockenwellen von Brennkraftmaschinen verwendet, um Querschwingungen des Zugmittels zu unterbinden. Die Spanneinrichtung umfasst dabei üblicherweise eine mit einer Spannschiene zusammen wirkende hydraulisch beaufschlagbare Kolben-Zylinder-Anordnung, welche über eine Bohrung direkt druckbeaufschlagbar ist. Das Druckmittel wird mittels einer Pumpe von einem Druckmittelreservoir über eine Steigleitung zur geodätisch höher liegenden Spanneinrichtung gefördert.

Beim Stillstand der Brennkraftmaschine, wenn die Pumpe nicht in Betrieb ist, läuft die Steigleitung leer, indem darin vorhandenes Druckmittel in das Druckmittelreservoir abfließt. Beim Start der Brennkraftmaschine und Inbetriebnahme der Pumpe muss daher zunächst Druckmittel vom Druckmittelreservoir durch die Steigleitung zur Spanneinrichtung gefördert werden, sodass ein erforderlicher Betriebsdruck an der Spanneinrichtung erst nach einigen Sekunden anliegt. Während dieser Zeit unterliegt das Zugmittel aufgrund von Drehungleichförmigkeiten allerdings bereits starken Schwingungen, es wirken hohe Kräfte auf die Spanneinrichtung und deren Kolben-Zylinder-Anordnung. Da an der Kolben-Zylinder-Anordnung noch kein neues Druckmittel zur Versorgung ansteht, zieht diese Luft und verliert ihre dämpfenden Eigenschaften mit der Folge einer sehr hohen Geräuschentwicklung und einer übermäßigen Abnutzung. Erst bei vollständig druckbeaufschlagter Spanneinrichtung ist deren Funktionsfähigkeit gegeben.

Aufgabe der Erfindung ist es daher, eine eingangs genannte Druckmittelversorgung für eine hydraulische Spanneinrichtung bereitzustellen, welche bereits bei Inbetriebnahme des Zugmittelgetriebes nach einem Stillstand ohne Zeitverzögerung eine volle Wirksamkeit der Spanneinrichtung ermöglicht.

Die Lösung der Aufgabe erfolgt mit einer Druckmittelversorgung mit den Merkmalen des Anspruchs 1, wobei erfindungsgemäß das zweite Druckmittelreservoir eine wenigstens je eine Eingangs- und eine Ausgangsbohrung aufweisende Grundplatte und ein mit dieser dicht verbundenes topfförmiges Reservoirgehäuse umfasst. Mit diesem zweiten Druckmittelreservoir wird eine sofortige Druckmittelbeaufschlagung der hydraulischen Spanneinrichtung bei Inbetriebnahme des Zugmittelgetriebes nach einer Stillstandsphase ermöglicht.

Besonders zu bevorzugende Ausführungsbeispiele und Weiterbildungen der Erfindung sind Gegenstand der Unteransprüche.

Vorzugsweise ist dem zweiten Druckmittelreservoir ausgangsseitig ein Rückschlagventil zugeordnet. Mit dem Rückschlagventil wird ein Leerlaufen des zweiten Druckmittelreservoirs im Stillstand verhindert.

Von besonderem Vorteil ist es, wenn das zweite Druckmittelreservoir eingangsseitig wenigstens eine im Reservoirraum mündende Steigleitung umfasst. Über die Steigleitung ist der Reservoirraum mit Druckmittel befüllbar.

Gemäß einer bevorzugten Ausführung ist die Grundplatte mit einem Maschinengehäuse, insbesondere einer Brennkraftmaschine, verbindbar und gewährleistet eine funktionssichere Anbindung und Zuordnung der Druckmittelversorgung.

Zweckmäßigerweise ist die Steigleitung des zweiten Druckmittelreservoirs im Reservoirraum in der Eingangsbohrung der Grundplatte dicht befestigt und endseitig am Bodenbereich des topfförmigen Reservoirgehäuses festgelegt. In der Grundplatte wird die Steigleitung so sicher geführt, mit ihrer Befestigung am Bodenbereich des topfförmigen Reservoirgehäuses ist eine zweifache Einspannung gegeben, sodass Vibrationen am Steigrohr unterbunden sind.

Bevorzugt ist es, wenn die Steigleitung des zweiten Druckmittelreservoirs im Reservoirraum in einem in Einbaulage geodätisch zumindest annähernd höchsten Punkt mündet. So wird eine maximale Befüllung des Reservoirraums mit Druckmittel gewährleistet.

Vorzugsweise ist das zweite Druckmittelreservoir in Einbaulage geodätisch oberhalb der Spanneinrichtung angeordnet.

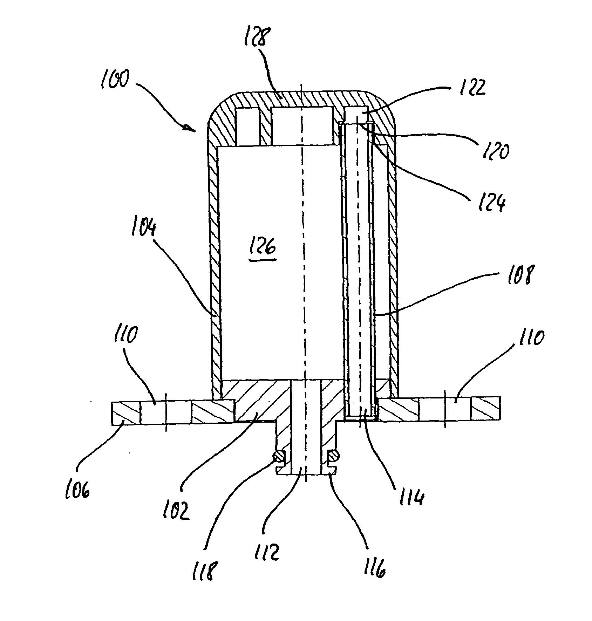

Nachfolgend ist unter Bezugnahme auf die einzige Figur, welche schematisch und beispielhaft ein zweites Druckmittelreservoir einer Druckmittelversorgung für eine hydraulische Spanneinrichtung eines Zugmittelgetriebes zeigt, näher erläutert.

Das zweite Druckmittelreservoir 100 ist vorliegend zwischen einem ersten Druckmittelreservoir und einer hydraulischen Spanneinrichtung eines Nockenwellenantriebs einer Brennkraftmaschine eines Kraftrads angeordnet. Die hier nicht näher dargestellte hydraulische Spanneinrichtung umfasst eine Spannschiene zur Führung und zum Spannen eines Zugmittels, vorliegend einer Steuerkette sowie einer hydraulisch druckbeaufschlagbaren Kolben-Zylinder-Anordnung zur Spannkraftbeaufschlagung der Spannschiene.

Das zweite Druckmittelreservoir 100 umfasst eine Grundplatte 102 und ein mit dieser dicht verbundenes topfförmiges Reservoirgehäuse 104. Vorliegend ist die Grundplatte 102 als Platte ausgestaltet und weist mittig eine Ausgangsbohrung 112 auf. Ausgangsseitig bildet die Grundplatte 102 zugleich einen Anschlussstutzen 116 mit Nut zur Aufnahme eines Dichtungsrings 118. Außermittig weist die Grundplatte 102 zwei Eingangsbohrungen 114 auf, in denen zwei sich in das Innere des Druckmittelreservoirs erstreckende Steigrohre 108 fest und dicht aufgenommen sind. Mit der Grundplatte ist ein topfförmiges Reservoirgehäuse 104 dicht verbunden, außerdem ist mit der Grundplatte 102 ein Befestigungsbohrungen 110 umfassender Befestigungsflansch 106 verbunden.

Die Steigleitungen 108 sind vorliegend als gelötete Rohre ausgeführt. Mit Grundplatte 102 und Reservoirgehäuse 104 ist ein Reservoirraum 126 gebildet. Nach erstmaliger Befüllung mit Druckmittel wird der Reservoirraum 126 immer eine für den einwandfreien Betrieb der Spanneinrichtung ausreichende Menge Druckmittel enthalten.

## Patentansprüche

1. Druckmittelversorgung für eine hydraulische Spanneinrichtung eines Zugmittelgetriebes umfassend ein erstes Druckmittelreservoir, eine Pumpe zur Förderung von Druckmittel aus dem ersten Druckmittelreservoir zur Spanneinrichtung und ein zweites Druckmittelreservoir (100) zwischen erstem Druckmittelreservoir und Spanneinrichtung, **dadurch gekennzeichnet, dass** das zweite Druckmittelreservoir (100) eine wenigstens je eine Eingangs- (114) und eine Ausgangsbohrung (112) aufweisende Grundplatte (102) und ein mit dieser dicht verbundenes topfförmiges Reservoirgehäuse (104) umfasst.

2. Druckmittelversorgung nach Anspruch 1, **gekennzeichnet durch** ein dem zweiten Druckmittelreservoir (100) ausgangsseitig zugeordnetes Rückschlagventil.

3. Druckmittelversorgung nach einem der vorhergehenden Ansprüche, **dadurch gekennzeichnet, dass** das zweite Druckmittelreservoir (100) eingangsseitig wenigstens eine im Reservoirraum (126) mündende Steigleitung (108) umfasst.

4. Druckmittelversorgung nach Anspruch 3, **dadurch gekennzeichnet, dass** die Steigleitung (108) des zweiten Druckmittelreservoirs (100) im Reservoirraum (126) in der Eingangsbohrung (114) der Grundplatte (102) dicht befestigt und endseitig am Bodenbereich (128) des topfförmigen Reservoirgehäuses (104) festgelegt ist.

5. Druckmittelversorgung nach Anspruch 3, **dadurch gekennzeichnet, dass** die Steigleitung (108) des zweiten Druckmittelreservoirs (100) im Reservoirraum (126) in einem in Einbaulage geodätisch zumindest annähernd höchsten Punkt mündet.

6. Druckmittelversorgung nach einem der vorhergehenden Ansprüche, **dadurch gekennzeichnet, dass** das zweite Druckmittelreservoir (100) in Einbaulage geodätisch oberhalb der Spanneinrichtung angeordnet ist.

## Claims

1. A pressure-medium supply for a hydraulic tensioning device for a belt and chain drive, comprising a first pressure-medium reservoir, a pump for conveying pressure medium from the first pressure-medium reservoir to the tensioning device and a second pressure-medium reservoir (100) between the first pressure-medium reservoir and the tensioning device, **characterised in that** the second reservoir (100) has a baseplate (102) comprising at least one inlet bore (114) and one outlet bore (112) and a pot-shaped reservoir casing (104) tightly connected to the baseplate.

2. A pressure-medium supply according to claim 1, **characterised by** a non-return valve associated with the second pressure-medium reservoir (100) on the outlet side.

3. A pressure-medium supply according to any of the preceding claims, **characterised in that** the pressure-medium reservoir (100), on the inlet side, comprises at least one ascending pipe (108) opening into the reservoir space (126).

4. A pressure-medium supply according to claim 3, **characterised in that** the ascending pipe (108) of the second reservoir (100) in the reservoir space (126) is tightly fastened in the inlet bore (114) the baseplate (102) and its end is fastened to the end region (128) of the pot-shaped reservoir casing (104).

5. A pressure-medium supply according to claim 3, **characterised in that** the assembly pipe (108) of the second reservoir (100) opens into the reservoir space (126) at a point which is at least approximately highest geodesically when in the installed position.

6. A pressure-medium supply according to any of the preceding claims, **characterised in that** the second pressure-medium reservoir (100), when in the installed position, is disposed geodesically above the tensioning device.

## Revendications

1. Alimentation en liquide sous pression pour une installation hydraulique de mise en tension d'une transmission à moyen de traction comprenant un premier réservoir de liquide sous pression, une pompe pour transférer le liquide sous pression du premier réservoir vers l'installation de mise en tension ainsi qu'un second réservoir de liquide sous pression (100) entre le premier réservoir et l'installation de mise en tension,
alimentation **caractérisée en ce que**
le second réservoir de liquide sous pression (100) comporte une plaque de base (102) ayant au moins un perçage d'entrée (114) et un perçage de sortie (112) respectifs, ainsi qu'un boîtier de réservoir (104), en forme de pot, relié à cette plaque de base.

2. Alimentation en liquide sous pression selon la revendication 1,
**caractérisée en ce que**
la sortie du second réservoir de liquide sous pression (100) comporte un clapet antiretour.

3. Alimentation en liquide sous pression selon l'une des revendications précédentes,
**caractérisée en ce que**
le second réservoir de liquide sous pression (100) comporte, côté entrée, au moins une conduite montante (108) débouchant dans l'enceinte (126) du réservoir.

4. Alimentation en liquide sous pression selon la revendication 3,
**caractérisée en ce que**
la conduite montante (108) du second réservoir de liquide sous pression (100) est fixée de manière étanche dans un perçage d'entrée (114) de la plaque de base (102) de l'enceinte de réservoir (126) et elle est fixée, côté extrémité, dans la zone du fond (128) du boîtier de réservoir (104) en forme de pot.

5. Alimentation en liquide sous pression selon la revendication 3,
**caractérisée en ce que**
la conduite montante (108) du second réservoir de liquide sous pression (100) débouche dans l'enceinte (126) du réservoir au point géodésique, au moins sensiblement le plus haut en position de montage.

6. Alimentation en liquide sous pression selon l'une des revendications précédentes,
**caractérisée en ce que**
le second réservoir de liquide sous pression (100) se trouve en position de montage, en position géodésique au-dessus de l'installation de serrage.
